# EUROPEAN PATENT APPLICATION

(11) **EP 4 206 143 A1**
(43) Date of publication of application: **05.07.2023**
(21) Application number: 22217300.7
(22) Date of filing: 30.12.2022
(51) Int. Cl.: C02F 1/00, C02F 1/42

(54) **VALVE BASED WATER SOFTENER SYSTEM AND METHOD**

(30) Priority: 30.12.2021 US 202163266221 P
(71) Applicant: Pentair, Inc., Minneapolis, Minnesota 55416-1261 (US)
(72) Inventor: TULO, Ajit, 201306 Greater Noida (IN); BAROLA, Neerav, 201309 Noida (IN)
(74) Representative: Viering, Jentschura & Partner mbB Patent- und Rechtsanwälte

(57) **Abstract**

An apparatus and method for softening water are provided. The water softening system comprises a water softener apparatus comprising a tank designed to contain a resin bed and a water softener head coupled to the tank. The water softener head comprises at least one inlet, at least one outlet, a first channel in fluid communication with the first outlet, and a second channel in fluid communication with the first inlet. The water softening system includes at least one inlet water line for hard water and one outlet water line for softened water. A controller is provided and is configured to detect a first operating state of the water softening system, monitor the performance of the water softening system, and send instructions to at least one of the first valve and the second valve to change from a first operational state to a second operational state.

## Description

### CROSS-REFERENCE TO RELATED APPLICATIONS

This application claims the benefit of U.S. Provisional Patent Application No. 63/266,221, filed December 30, 2021, entitled VALVE BASED WATER SOFTENER SYSTEM AND METHOD, the entire contents of which are incorporated herein by reference.

### TECHNICAL FIELD

The present disclosure generally relates to water softeners. More particularly, the disclosure relates to a valve-based water softening system including two- and three-way valves.

### BACKGROUND

In general, water softening involves the conversion of hard water to soft water by removing calcium and magnesium ions from hard water. Conventional water softening systems typically use multi-port valves to control the flow of fluids through the water softener system. Multi-port valves may be beneficial because they can be used to control both the flow direction and the flow rate of a fluid. However, because multi-port valves can include three, four, or even five-way control, the direction and flow rate of fluid flow through the multi-port valve may be controlled using cams, gears, and/or pistons. A downside to cams, gears, and/or pistons is that they can be prone to failure. Thus, if the multi-port valve malfunctions, the water softener may not function properly because the correct fluid path may not be established. Moreover, it may be difficult to maintain a desired flow rate using multi-port valves.

Therefore, there is a need for a water-softening system, including a valve structure that does not rely on cams, gears, and/or pistons.

### SUMMARY

A water softener system is provided. The water softener system comprises a head, a water softener tank connected to the head through a center tube, and a controller. The head comprises a first inlet, a second inlet, a first outlet, and a second outlet. The center tube is connected to the first inlet, the second inlet, the first outlet, and/or the second outlet. The controller operates each of one or more valves between an open state or a closed state to control a flow of fluid (e.g., water) in the water softener system.

A head for a water softener system is provided. The head comprises a first inlet, a second inlet, a first outlet, and a second outlet. The head also comprises a center tube connected to the first inlet, the second inlet, the first outlet, and/or the second outlet. Further, the first inlet, the second inlet, the first outlet, and/or the second outlet are connected to one or more valves. Moreover, each of the one or more valves is operated by a controller into an open state or a closed state to control a flow of fluid in the water softener system.

A method for controlling a flow of fluid for water treatment is provided. The method comprises the step of receiving a command from a user to operate a water softener system in a cycle. The method also comprises the step of operating, by a controller, each of one or more valves in an open state or a closed state based on the cycle to control a flow of fluid in the water softener system.

In some embodiments, the one or more valves are connected to the first inlet, the second inlet, the first outlet, and/or the second outlet.

In some embodiments, the one or more valves comprise a first valve, a second valve, a third valve, a fourth valve, a fifth valve, a sixth valve, a seventh valve, an eighth valve, and a flow control valve.

In some embodiments, the one or more valves are operated in the open state and/or the closed state using a controller.

In some embodiments, the first inlet and the second inlet are parallel to each other.

In some embodiments, the first outlet and the second outlet are parallel to each other.

In some embodiments, the flow of fluid is controlled in one of a service cycle, a backwash cycle, a brine draw cycle, a slow rinse cycle, a rapid rinse cycle, a brine tank refill cycle, and/or a bypass cycle.

In some embodiments, the flow of fluid is controlled to convert hard water to soft water.

In some embodiments, the first valve and the second valve are operated in the open state during the service cycle, and the other valves are operated in the closed state.

In some embodiments, the third valve and the fourth valve are operated in the open state during the backwash cycle, and the other valves are operated in the closed state.

In some embodiments, the first valve, the fifth valve, the sixth valve, and the flow control valve are operated in the open state during the brine draw cycle, and the other valves are operated in the closed state.

In some embodiments, the first valve, the fifth valve, and the flow control valve are operated in the open state during the slow rinse cycle, and the other valves are operated in the closed state.

In some embodiments, the first valve, the fifth valve, and the flow control valve are operated in the open state during the rapid rinse cycle, and the other valves are operated in the closed state.

In some embodiments, the first valve, the second valve, and the seventh valve are operated in the open state during the brine tank refill cycle, and the other valves are operated in the closed state.

In some embodiments, the eighth valve is operated in the open state during the bypass cycle and the other valves are operated in the closed state.

In some embodiments, the fluid enters the second inlet through the first valve, flows from the second inlet to the water softener tank, flows up to the center tube, and exits from the first outlet through the second valve during the service cycle.

In some embodiments, the fluid enters the first inlet through the fourth valve, flows from the first inlet to the water softener tank through the center tube, and exits from the second outlet through the third valve during the backwash cycle.

In some embodiments, the fluid enters the second inlet through the first valve and is mixed with brine solution provided through the sixth valve to form a mixed fluid, wherein the mixed fluid enters the water softener tank, flows up to the center tube, and exits from the first outlet through the fifth valve during the brine draw cycle.

In some embodiments, the fluid enters the second inlet through the first valve, flows from the second inlet to the water softener tank, flows up to the center tube, and exits from the first outlet through the fifth valve during the slow rinse cycle and rapid rinse cycle.

In some embodiments, the fluid enters the second inlet through the first valve, flows from the second inlet to the water softener tank, flows up to the center tube and exits from the first outlet, flows to the second valve and seventh valve, and refills a brine tank during the brine refill cycle.

In some embodiments, the fluid enters from a pump and flows through an eighth valve to supply the fluid to a user during the bypass cycle.

In some embodiments, the water softener system reverses the flow of fluid without using any moving piston parts.

A water softener system is provided. The water softener system comprises a head, a water softener tank, and a controller. The head comprises an inlet, an outlet, and a center tube connected to the inlet and the outlet. The water softener tank is connected to the head through the center tube. The controller operates a first set of valves in a first open state, a second open state, or a closed state, and operates a second set of valves in an open state or a closed state, to control a flow of fluid in the water softener system.

In some embodiments, the first set of valves and the second set of valves are connected to the inlet and the outlet.

In some embodiments, the second set of valves comprises a first valve, a second valve, and a flow control valve. The first set of valves comprises a first motorized 3-way valve, a second motorized 3-way valve, and a third motorized 3-way valve.

In some embodiments, the first set of valves and the second set of valves are operated in the first open state, the second open state, the open state, and/or the closed state using a controller.

In some embodiments, the flow of fluid is controlled through the water softener in one of a service cycle, a backwash cycle, a brine draw cycle, a slow rinse cycle, a rapid rinse cycle, a brine tank refill cycle, and/or a bypass cycle.

In some embodiments, during the service cycle, the first motorized 3-way valve, the second motorized 3-way valve, and the third motorized 3-way valve are operated in the first open state, and the first valve, the second valve, and the flow control valve are operated in the closed state.

In some embodiments, during the backwash cycle, the first motorized 3-way valve, the second motorized 3-way valve, and the third motorized 3-way valve are operated in the second open state, the first valve and the second valve are operated in the closed state, and the flow control valve is operated at a fully open state.

In some embodiments, during the brine draw cycle, the first motorized 3-way valve and the second motorized 3-way valve are operated in the first open state, the third motorized 3-way valve is operated in the second open state, the flow control valve is operated at one (1) gallon per minute (GPM), the first valve is operated in the closed state, and the second valve is operated in the open state.

In some embodiments, during the slow rinse cycle, the first motorized 3-way valve and the second motorized 3-way valve are operated in the first open state, the third motorized 3-way valve is operated in the second open state, the flow control valve is operated at one (1) gallon per minute (GPM), and the first valve and the second valve are operated in the closed state.

In some embodiments, during the fast/rapid rinse cycle, the first motorized 3-way valve and the second motorized 3-way valve are operated in the first open state, the third motorized 3-way valve is operated in the second open state, the flow control valve is operated at a fully open state, and the first valve and the second valve are operated in the closed state.

In some embodiments, during the brine tank refill cycle, the first motorized 3-way valve, the second motorized 3-way valve, and the third motorized 3-way valve are operated in the first open state, and the first valve, the second valve, and the flow control valve are operated in the closed state.

In some embodiments, during the bypass cycle, the first motorized 3-way valve, the second motorized 3-way valve, and the third motorized 3-way valve are operated in the closed state, the second valve and the flow control valve are operated in the closed state, and the first valve is operated in the open state.

In some embodiments, the fluid enters the inlet through the first motorized 3-way valve, travels from the inlet to the water softener tank, flows up to the center tube, and exits from the outlet through the second motorized 3-way valve during the service cycle.

In some embodiments, the fluid enters the inlet through the first motorized 3 -way valve, enters the outlet through a third tee connector, flows from the outlet to the water softener tank, exits the water softener tank through a second tee connector, reaches the second motorized 3-way valve and the third motorized 3-way valve to drain out through a drain line, during the backwash cycle.

In some embodiments, the fluid enters the inlet through the first motorized 3-way valve and a second tee connector and is mixed with brine solution provided through the second valve to form a mixed fluid, wherein the mixed fluid enters the water softener tank, flows up to the center tube, and exits from the outlet to a drain line through a third tee connector, the second motorized 3-way valve, the third motorized 3-way valve, and the flow control valve during the brine draw cycle.

In some embodiments, the fluid enters the inlet through the first motorized 3-way valve and the second tee connector, flows from the inlet to the water softener tank, flows up to the center tube, and exits from a drain line through a third tee connector, the second motorized 3-way valve, the third motorized 3-way valve, and the flow control valve during the slow cycle and rapid rinse cycle.

In some embodiments, the fluid enters the inlet through the first motorized 3-way valve and a second tee connector, travels from the inlet to the water softener tank, flows up to the center tube and exits from the outlet, exits from the outlet, and an outlet line through a third tee connector, the second motorized 3-way valve, and a fourth tee connector during the brine refill cycle.

In some embodiments, the fluid enters from a pump and flows through the first valve to supply the fluid to a user during the bypass cycle.

A method for controlling a flow of fluid for water treatment is also provided. The method comprises the steps of receiving a command from a user to operate a water softener system in a cycle. The method comprises the steps of operating, by a controller, a first set of valves in a first open state, a second open state, or a closed state, and a second set of valves in an open state or a closed state, to control a flow of fluid in the water softener system.

A water softener system is provided. The water softener system includes a head having an inlet, an outlet, and a center tube connected to the inlet and the outlet. The water softener system comprises a water softener tank connected to the head through the center tube. The water softener system comprises a controller for operating a first set of valves in a first state or a second state and operating a second set of valves in an open state or a closed state, to control a flow of fluid in the water softener system.

In some embodiments, the first set of valves and the second set of valves are connected to the inlet and the outlet.

In some embodiments, the first set of valves comprises a first motorized 3-way L-port valve and a second motorized 3-way L-port valve, wherein the second set of valves comprises a first 2-way valve and a second 2-way valve.

In some embodiments, the first set of valves is operated in the first state or the second state, and/or the second set of valves is operated in the open state or the closed state using a controller.

In some embodiments, the flow of fluid through the water softener system is controlled in one of a service cycle, a backwash cycle, a brine draw cycle, a slow rinse cycle, a rapid rinse cycle, a brine tank refill cycle, and/or a bypass cycle.

In some embodiments, the flow of fluid is controlled to convert hard water to soft water. In some embodiments, during the service cycle, the first motorized 3-way L-port valve and the second motorized 3-way L-port valve are each operated in the first state, and the first 2-way valve and the second 2-way valve are operated in the closed state.

In some embodiments, during the backwash cycle, the first motorized 3-way L-port valve is operated in the second state and the second motorized 3-way L-port valve is operated in the first state, and the first 2-way valve is operated in the closed state and the second 2-way valve is operated in the open state.

In some embodiments, during the brine draw cycle, the first motorized 3-way L-port valve is operated in the second state and the second motorized 3-way L-port valve is operated in the second state, and the first 2-way valve is operated in the open state and the second 2-way valve is operated in the closed state.

In some embodiments, during the slow rinse cycle, the first motorized 3-way L-port valve is operated in the second state and the second motorized 3-way L-port valve is operated in the second state, and the first 2-way valve is operated in the open state and the second 2-way valve is operated in the closed state.

In some embodiments, during the fast/rapid rinse cycle, the first motorized 3-way L-port valve is operated in the first state and the second motorized 3-way L-port valve is operated in the second state, and the first 2-way valve and the second 2-way valve are operated in the closed state.

In some embodiments, the fluid enters an inlet line through a flow meter/indicator and the first motorized 3-way valve, reaches the inlet and the water softener tank, exits from the outlet, reaches the second motorized 3-way valve, and exits from an outlet line, during the service cycle.

In some embodiments, the fluid passes through the first motorized 3-way valve, enters the outlet through the second motorized 3-way valve, enters the water softener tank, exits through the inlet, passes through the first 2-way valve, and drains out through a drain line, during the backwash cycle.

In some embodiments, the fluid enters a brine line through the first motorized 3-way valve, passes through the second 2-way valve, and is mixed with a brine solution to form a mixed fluid, wherein the mixed fluid enters the inlet and the water softener tank, and exits from the outlet to a drain line through the second motorized 3-way valve, during the brine draw cycle.

In some embodiments, the fluid enters a brine line through the first motorized 3-way valve, passes through the second 2-way valve, enters the inlet and the water softener tank, and exits from the outlet to a drain line through the second motorized 3-way valve, during the slow cycle rinse cycle.

In some embodiments, the fluid enters an inlet line through the first motorized 3-way valve, enters the water softener tank through the inlet, and exits from the outlet to a drain line through the second motorized 3-way valve, during the fast/rapid cycle rinse cycle.

In some embodiments, the fluid enters the inlet line through the first motorized 3-way valve and is directed to a brine tank for refilling the brine tank, during the fast/rapid cycle rinse cycle.

In some embodiments, the fluid passes through the first motorized 3-way valve to directly supply the fluid to a user through an outlet line during one or more of the backwash cycle, the brine draw cycle, the slow rinse cycle, and/or the fast/rapid rinse cycle.

A method for controlling a flow of fluid for water treatment is provided. The method comprises the step of receiving a command from a user to operate a water softener system in a cycle. The method also comprises the steps of operating, by a controller, a first set of valves in a first state or a second state and/or a second set of valves in an open state or a closed state, to control a flow of fluid in the water softener system.

### DESCRIPTION OF THE DRAWINGS

FIG. 1 is a cross-sectional view of a water softener according to an embodiment;
FIG. 2 is an isometric view of a head of the water softener of FIG. 1;
FIG. 3 is a block diagram of an exemplary water softening system, including the water softener of FIG. 1;
FIG. 4 is a cross-sectional view of a water softener according to another embodiment;
FIG. 5 is a cross-sectional view of a water softener according to yet another embodiment;
FIG. 6 is an isometric view of a head of the water softener of FIG. 5;
FIG. 7 is a block diagram of an exemplary water softening system, including the water softener of FIG. 4 according to an embodiment;
FIG. 8 is a block diagram of an exemplary water softening system, including the water softener of FIG. 4, according to another embodiment; and
FIG. 9 is a method of automating the operation of a water softener.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

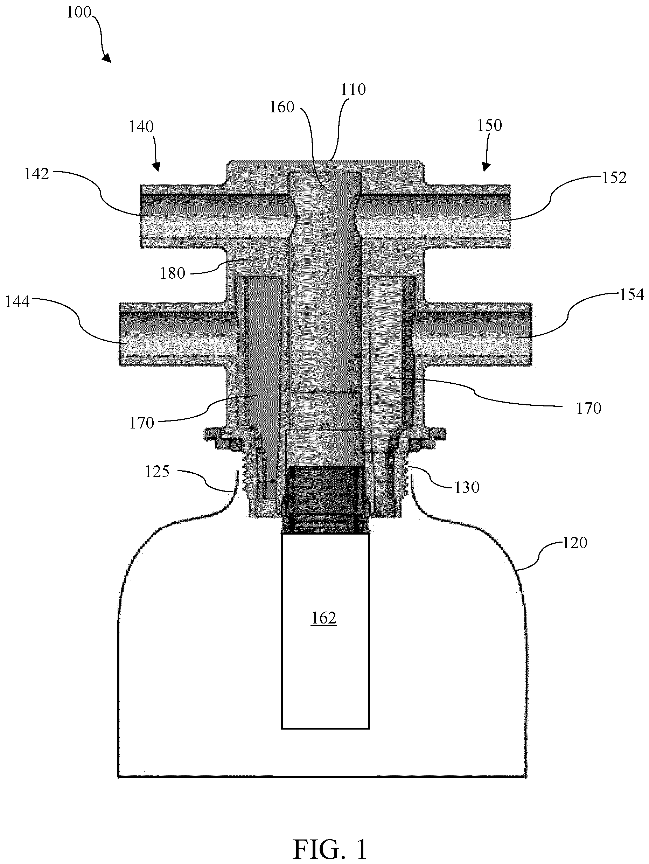

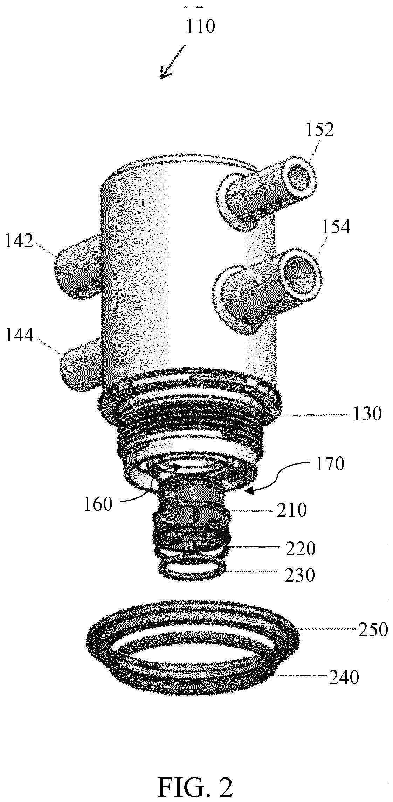

FIGS. 1 and 2 illustrate a first exemplary water softener 100. A head 110 is joined to a tank 120 to form the water softener 100. The tank 120 can include a neck 125 designed to accept a portion of the head 110. As shown in one embodiment, the head 110 can include an external threaded portion 130 designed to engage with the neck 125. However, the head 110 and the tank 120 can be joined by other known methods, such as a friction fit, a twist lock, a latch, or any other connection mechanism. As such, a seal may be formed between the head 110 and the tank 120.

The head 110 includes an inlet section 140 and an outlet section 150. The inlet section 140 includes a first inlet 142 and a second inlet 144. The first inlet 142 can be positioned above and substantially parallel to the second inlet 144. Similarly, the outlet section 150 can include a first outlet 152 and a second outlet 154, where the first outlet 152 is positioned above and substantially parallel to the second outlet 154. As shown, the first inlet 142 and the first outlet 152 can also be positioned directly opposite each other, and the second inlet 144 and the second outlet 154 can be positioned directly opposite each other. However, it is to be understood that each of the first inlet 142, the second inlet 144, the first outlet 152, and the second outlet 154 can be positioned in any orientation relative to each other.

The head 110 further includes a first channel 160 and a second channel 170 for transporting fluids into the tank 120. Each of the first inlet 142 and the first outlet 152 are in fluid communication with the first channel 160. The second inlet 144 and the second outlet 154 are in fluid communication with the second channel 170. The first channel 160 may be positioned within the second channel 170 (i.e., the second channel 170 surrounds the first channel 160). As such, the first channel 160 and the second channel 170 are separated by a wall 180. The wall 180 can be a part of the head 110. Alternatively, the wall 180 may be an outer wall of the first channel 160. The first channel 160 can include a conduit 162 extending from the head 110 into the tank 120.

As shown best in FIG. 2, the first channel 160 can include a coupling 210. The coupling 210 can be designed to position the first channel 160 within (and/or in fluid communication with) the head 110. The coupling 210 can include a first O-ring 220 to help prevent fluid from leaking into or out of the first channel 160 to the second channel 170. The first O-ring 220 can be secured with a first lock ring 230. Further, to prevent fluid from leaking into or out of the tank 120, the head 110 can include a second O-ring 240 secured by a second lock ring 250.

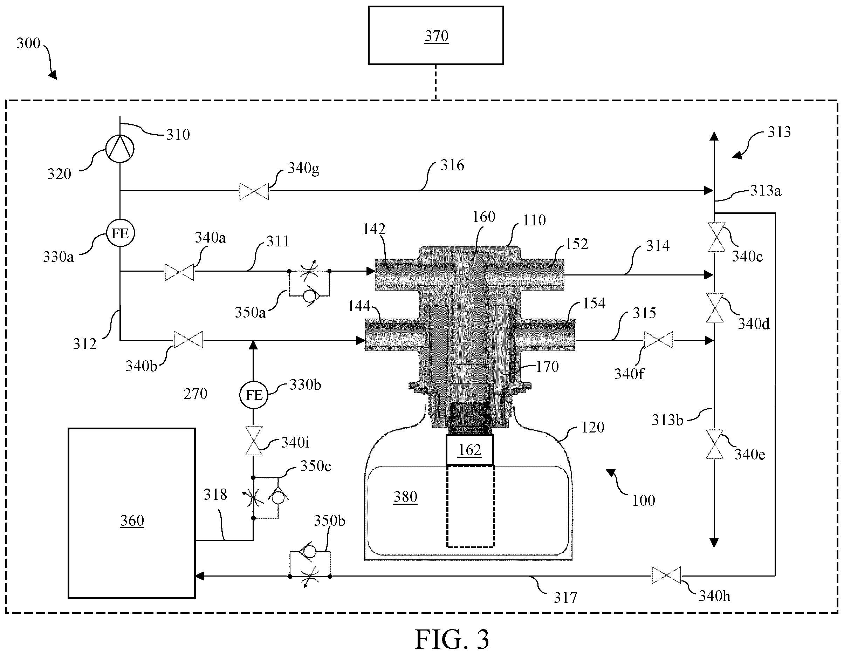

Turning to FIG. 3, a schematic diagram of a water softening system 300 utilizing the water softener 100 is shown. Hard water is delivered to the water softener 100 via a make-up line 310. The make-up line 310 can include a feed pump 320 and a first flow meter 330a for monitoring and controlling fluid flow through the make-up line 310. The make-up line 310 can include a first inlet line 311 and a second inlet line 312 downstream of the feed pump 320, and the first flow meter 330a.

The first inlet line 311 is in fluid communication with the first inlet 142 of the water softener 100. The first inlet line 311 can include a first valve 340a and a first flow restrictor 350a downstream of the first valve 340a. The second inlet line 312 is downstream of the first inlet line 311 and is in fluid communication with the second inlet 144 of the water softener 100. The second inlet line 312 can include a second valve 340b.

Softened water, brine, and/or waste can be removed from the water softener 100 via a product line 313. The product line 313 is in fluid communication with the water softener 100 via a first outlet line 314 that extends from and is in fluid communication with the first outlet 152, and a second outlet line 315 that extends from and is in fluid communication with the second outlet 154. The product line 313 can include a third valve 340c, a fourth valve 340d, and a fifth valve 340e for controlling the direction of fluid flow through therethrough. The first outlet line 314 can engage the product line 313 between the third valve 340c and the fourth valve 350d. The second outlet line 315 can engage the product line 313 between the fourth valve 350d and the fifth valve 350e. The second outlet line 315 can include a sixth valve 340f for controlling the fluid flow from the second outlet 154 to the product line 313.

The product line 313 can also be in fluid communication with the make-up line 310 via a bypass line 316. The take-off for the bypass line 316 can be downstream of the feed pump 320 and upstream of the first flow meter 330a of the make-up line 310. The tie-in for the bypass line 316 can be downstream of the third valve 340c of the product line 313. The bypass line 316 can also include a seventh valve 340g.

The product line 313 can also be in fluid communication with a brine tank 360 via a brine refill line 317. The take-off for the brine refill line 317 can be downstream of the third valve 340c and upstream of the tie-in for the bypass line 316. The brine refill line 317 can include an eighth valve 340h and a second flow restrictor 350b downstream of the eighth valve 340h. As shown, the brine tank 360 is a separate tank from the tank 120. However, in some embodiments, the brine tank 360 can be located within the tank 120.

The brine tank 360 can also be in fluid communication with the water softener 100 via a brine injection line 318 that engages the second inlet line 312. The brine injection line 318 can engage the second inlet line 312 downstream of the second valve 340b. The brine injection line 318 can include a third flow restrictor 350c, a ninth valve 340i downstream of the third flow restrictor 350c, and a second flow meter 330b downstream of the ninth valve 340i.

Each of the valves 340a-340i can be provided in the form of a check valve, a ball valve, a butterfly valve, a gate valve, a globe valve, an angle valve, a plug valve, a diaphragm valve, or any other valve in the known art. Each of the valves 340a-340i may also vary in size. For example, in some embodiments, the first valve 340a is ½ inch (in) valve, the second valve 304b is a ¾ in valve, the third valve 340c is a ¾ in valve, the fourth valve 340d is a ½ in valve, the fifth valve is either a ½ in valve or a ¾ in valve, the sixth valve 340f is a ½ in valve, the seventh valve 340g is a ¾ in valve, the eighth valve 340h is a ¾ in valve, and the ninth valve 340i is a ½ in valve. It is to be further understood that each of the valves 340a-340 may be smaller or larger, depending on the embodiment.

Each of the flow restrictors 350a-350c can be provided in the form of a valve, an orifice, a capillary, a slot, an annulus, a cone restrictor, or other flow restrictors or devices that inhibit fluid flow therethrough. It is to be further understood that system 300 can include more or fewer valves, flow restrictors, pumps, and flow meters than illustrated in FIG. 3.

One or more components of the system 300 can be communicatively coupled to a controller 370. As discussed in more detail below, the controller 370 can receive information from the system 300, interpret the information, and send instructions back to the system 300.

Still referring to FIG. 3, as can be seen, the system 300 includes multiple fluid lines and devices for controlling the flow of fluids throughout the system 300. As such, the flow of a fluid through the system 300 can depend on the mode of operation, wherein the mode of operation can be a service cycle, a backwash cycle, a brine draw cycle, a slow rinse cycle, a rapid rinse cycle, a brine tank refill cycle, and/or a bypass cycle. Thus, the following embodiments discuss in detail each of the above modes of operation for the system 300.

During a service cycle, hard water from the make-up line 310 flows through the second inlet line 312 into the water softener 100. Thus, the first valve 340a and the seventh valve 340g are in a closed position, and the second valve 340b is in an open position so that the flow of the hard water is directed to the second inlet line 312. The hard water enters the second inlet 144 and flows through the second channel 170 into the tank 120. The tank 120 may be filled with a resin bed 380. The resin bed 380 can be provided in the form of an ion exchange bed. In some embodiments, the resin bed 380 can include two or more types of resin (i.e., a mixed resin bed). As such, as the hard water flows into the tank 120, the hard water comes into contact with the top of the resin bed 380 and passes down through the resin bed 380 toward the bottom of the tank 120. The resin bed 380 removes hardness from the hard water in the form of calcium ions and magnesium ions and replaces them with sodium ions, thereby softening the hard water. The softened water then flows up through the conduit 162 and into the first channel 160. The softened water exits the water softener 100 through the first outlet 152 into the first outlet line 314, and out the product line 313. Thus, the sixth valve 340f is closed so that the softened water is directed through the first outlet 152. Further, the fourth valve 340d is in a closed position, and the third valve 340c is in an open position so that the softened water flows out of a product side 313a of the product line 313.

As described above, during the service cycle, as the hard water flows through the resin bed 380, sodium ions from the resin bed 380 are swapped with calcium and magnesium ions from the hard water. Thus, the resin bed 380 can become exhausted (i.e., loaded with calcium and magnesium ions). The resin bed 380 can be regenerated through a regeneration cycle, which uses a regenerant solution that removes ions that were picked up by the resin bed 380 during the service cycle. The regeneration cycle may include one or more steps or cycles as described below.

The first step in the regeneration cycle may be a backwash cycle. During the backwash cycle, the feed pump 320 pumps a cleaning fluid, such as water, through the first inlet line 311 into the water softener 100. Thus, the first valve 340a is in an open position, and the second valve 340b and the seventh valve 340g are in a closed position so that the cleaning fluid is directed to the first inlet line 311. The cleaning fluid passes through the first inlet 142, through the first channel 160, down through the conduit 162, and into the resin bed 380. The cleaning fluid flows up through the resin bed 380, thereby loosening impurities, such as solid contaminants, collected in the resin bed 380 during the service cycle. The resin bed 380 may be comprised of small particles or beads. Thus, high flow rates can cause some of the resin bed 380 to become entrained with the cleaning fluid. Therefore, the first flow restrictor 350a is designed to reduce the flow rate of the cleaning fluid so that the resin bed 380 is not blown out of the water softener 100. Further, in some embodiments, the water softener 100 can include one or more resin traps to prevent the loss of resin. The resin traps can be placed in an opening in one or more of the first channel 160, the second channel 170, the first outlet 152, and/or the second outlet 154. The resin traps can be provided in the form of a mesh covering, a strainer, a sieve, or any other known particle filter in the art. Thus, as the cleaning fluid leaves the water softener 100, any entrained resin particles are prevented from leaving the water softener 100.

The spent cleaning fluid, which now contains impurities, is directed through the second outlet line 315 and sent to waste via the product line 313. Thus, the fifth valve 340e and the sixth valve 340f are in an open position, and the fourth valve 340d is in a closed position so that the spent cleaning fluid flows through a waste side 313b of the product line 313.

After the backwash cycle, the resin bed 380 is still loaded with calcium and magnesium ions. Thus, the hardness collected by the resin bed 380 must still be removed. As such, a brine draw cycle, which uses a sodium-rich solution to regenerate the resin bed 380, may be a second step in the regeneration cycle.

During the brine draw cycle, the feed pump 320 pumps a dilution fluid, such as water, through the second inlet line 312. In a preferred embodiment, the dilution fluid is soft water so that the dilution fluid does not further exhaust the resin bed 380. The dilution fluid is mixed with a sodium-rich fluid to form a brine solution. Thus, the ninth valve 340i is opened so that the sodium-rich fluid contained in the brine tank 360 can be injected into the second inlet line 312, thereby mixing with the dilution fluid to form the brine solution. The brine injection line 318 can include a vacuum injector to create a vacuum that draws the sodium-rich fluid from the brine tank 360. The brine injection line 318 can also include a third flow restrictor 350c to control the sodium-rich fluid's flow rate. The brine injection line 318 can include a second flow meter 330b for monitoring the flow rate of the sodium-rich solution.

In some embodiments, the brine solution is drawn at a rate of approximately 0.25 gallons per minute (GPM) and mixed with the dilution fluid, having a flow rate of approximately 1 GPM. Thus, the ratio of the sodium-rich fluid to the dilution fluid is about 1:4. However, it is to be understood that the brine solution may be any ratio. The brine solution flows through the second inlet 144, through the second channel 170, and into the tank 120. The brine solution passes down through the resin bed 380 and is removed from the tank 120 through the conduit 162. As the brine solution passes through the resin bed 380, the sodium ions in the brine solution are swapped with the calcium and magnesium ions. Thus, the water leaving the tank 120 is now rich with calcium and magnesium ions (i.e., hard water). The hard water is sent to waste via the first outlet line 314. Thus, the sixth valve 340f of the second outlet line 315 is closed so that the hard water is directed to the first outlet line 314. Further, the third valve 340c is closed, and the fourth valve 340d and the fifth valve 340e of the product line 313 are opened so that the hard water is directed to a waste container.

In one embodiment, the brine draw cycle may run for a specified time period (i.e., 20 minutes). However, in another embodiment, the brine draw cycle time is based on sodium levels and/or the conductivity levels of the tank 120. Thus, the system 300 can include one or more sensors for measuring conductivity and/or sodium. Following the brine draw cycle, a slow rinse cycle is used to displace excess residual brine solution from the resin bed 380.

During the slow rinse cycle, the flow of the sodium-rich solution from the brine tank 360 is blocked in by closing the ninth valve 340i. Thus, only the dilution fluid is fed to the water softener 100. The slow rinse cycle may run for a specified period of time, for example, about 25 minutes. The flow rate of the dilution solution may be maintained at the same flow rate as when the brine draw cycle was run. However, the flow rate of the dilution fluid may be increased or decreased depending on the needs of the system 300. The water from the slow rinse cycle may be sent to waste.

In mixed bed systems, the slow rinse cycle may help the resin to separate back into the different layers (i.e., the heavier resin will settle at the bottom of the resin bed 380, and the lighter resin will settle on top of the heavier resin). However, there may still be some residual brine solution in the resin bed 380. Thus, a rapid rinse cycle can help remove any remaining brine solution from the tank 120.

During the rapid rinse cycle, the only change from the slow rinse cycle is that the flow rate of the dilution fluid is increased. Typically, the flow rate of the dilution fluid is increased to the same flow rate of the make-up fluid during the service cycle. The increased flow rate of the dilution fluid helps remove any lingering brine solution from the resin bed 380, especially in "dead" areas of the tank 120 (i.e., areas that may not receive as much fluid circulation as other areas of the tank 120 due to tank geometry, fluid injection locations, etc.). The water from the rapid rinse cycle may be sent to waste.

In one embodiment, the rapid rinse cycle may run for a specified period of time, for example, 5 minutes. However, the run time of the rapid rinse cycle may also be controlled based on a measured conductivity value of the fluid in/leaving the tank 120. After the rapid rinse cycle is completed, the resin bed 380 is regenerated. Thus, the regeneration cycle may be complete. However, the brine tank 360 may need to be refilled. Therefore, a brine tank refill cycle may follow the rapid rinse cycle.

During the brine tank refill cycle, the flow of the dilution fluid is maintained. However, instead of sending the water that exits the water softener 100 to waste, the water is sent to the brine tank 360. Thus, the fourth valve 340d and the fifth valve 340e are closed and the third valve 340c of the product line 313 is opened, and the eighth valve 340h of the brine refill line 317 is opened so that the water leaving the water softener 100 is directed through the brine refill line 317. The flow rate of the dilution fluid may be maintained at the same flow rate as during the rapid rinse cycle, or the flow rate may be decreased. Further, the second flow restrictor 350b can help adjust the water flow rate through the brine refill line 317.

In one embodiment, the brine tank refill cycle may run for a specified period of time. However, in some embodiments, the brine tank 360 can include a level sensor. Thus, in some embodiments, the brine tank refill cycle may depend on the level in the brine tank 360 (i.e., the brine tank refill cycle may end once the brine tank 360 reaches a maximum level).

During a bypass cycle, all valves, except for the seventh valve 340g, may be closed so that the incoming water flowing through the make-up line 310 is diverted directly to the product line 313. The bypass cycle may be used when maintenance is being performed on the system 300 or when the incoming water may not require treatment (i.e., the hardness of the incoming water may be low enough that it does not need to be softened). Further, in some embodiments, the bypass line 316 may be opened during a service cycle so that the make-up water mixes with the softened water in the product line 313. This may be beneficial in reducing the load on the water softener 100 and thereby extending the time between regeneration cycles.

Table 1 below summarizes the orientation of the valves 340a-340i during the above cycles. Table 1 further includes example run times and flow rates for each cycle. However, it is to be understood that each cycle's run time and flow rate may vary depending on the embodiment.

| **Flow Cycle** | **Flow Rate (GPM) @ 50 psi inlet** | **Duration (mins)** | **Valve 340a** | **Valve 340b** | **Valve 340c** | **Valve 340d** | **Valve 340e** | **Valve 340f** | **Valve 340g** | **Valve 340h** | **Valve 340i** |
|---|---|---|---|---|---|---|---|---|---|---|---|
| Service Cycle | 4.8 | As per Usage | Closed | Open | Open | Closed | Closed | Closed | Closed | Closed | Closed |
| Backwash Cycle | 2.4 | 8 | Open | Closed | Closed | Closed | Closed | Open | Closed | Closed | Closed |
| Brine Draw Cycle | 0.25 | 20 | Closed | Open | Closed | Open | Open | Closed | Closed | Closed | Open |
| Slow Rinse Cycle | 1 | 26 | Closed | Open | Closed | Open | Open | Closed | Closed | Closed | Closed |
| Rapid Rinse Cycle | 2.4 | 6 | Closed | Open | Closed | Open | Open | Closed | Closed | Closed | Closed |
| Brine tank Refill Cycle | 1 | 14 | Closed | Open | Open | Closed | Closed | Closed | Closed | Open | Closed |
| Bypass Cycle | - | As per Usage | Closed | Closed | Closed | Closed | Closed | Closed | Open | Closed | Closed |

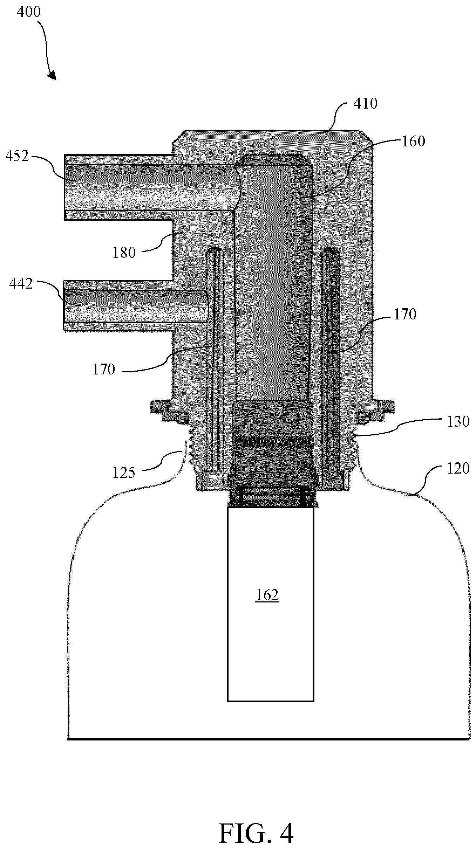

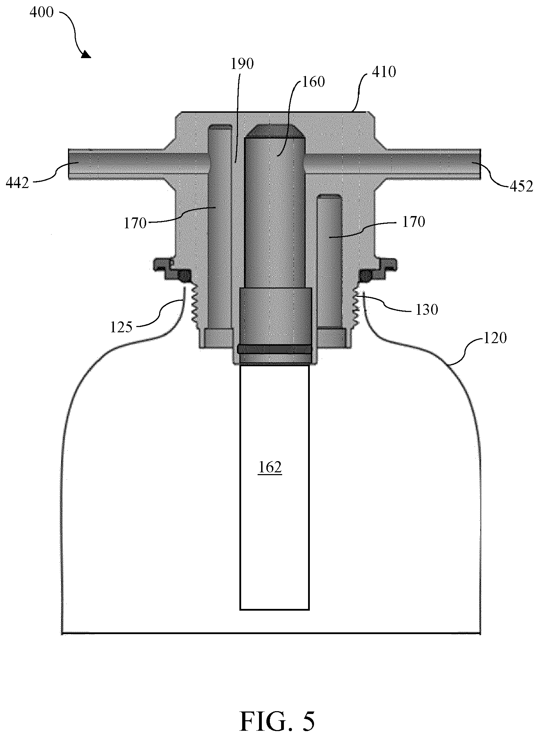

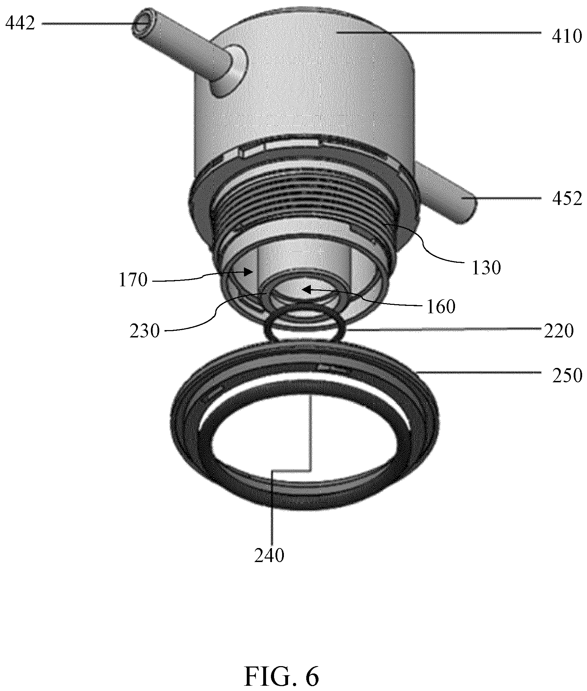

Now turning to FIGS. 4-6, various embodiments of a water softener 400 having a single inlet and outlet are shown. The water softener 400 is similar to the water softener 100 of FIG. 1. However, here a head 410 of the water softener 400 has only one inlet 442, and one outlet 452, instead of two inlets and outlets like the water softener 100 of FIG. 1. The water softener 400 is otherwise the same as the water softener 100 of FIG. 1. As shown in FIGS. 4 and 5, the inlet 442 is in fluid communication with the second channel 170, and the outlet 452 is in fluid communication with the first channel 160. As shown in FIG. 4, in one embodiment, the inlet 442 is positioned below and substantially parallel to the outlet 452. However, as illustrated in FIG. 5, in one embodiment, the inlet 442 is positioned opposite the outlet 452. As seen in FIG. 6, the head 410 is similar to the head 110 of FIG. 2 and can include a first O-ring 220, a first lock ring 230, a second O-ring 240, and a second lock ring 250. Although not shown, the head 410 can further include a coupling 210, as shown in FIG. 2.

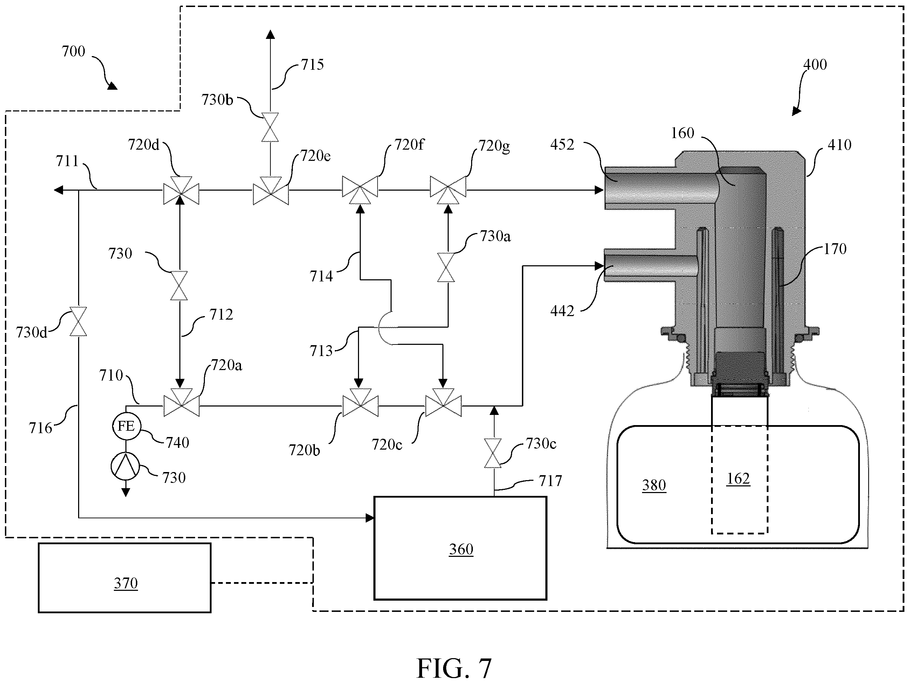

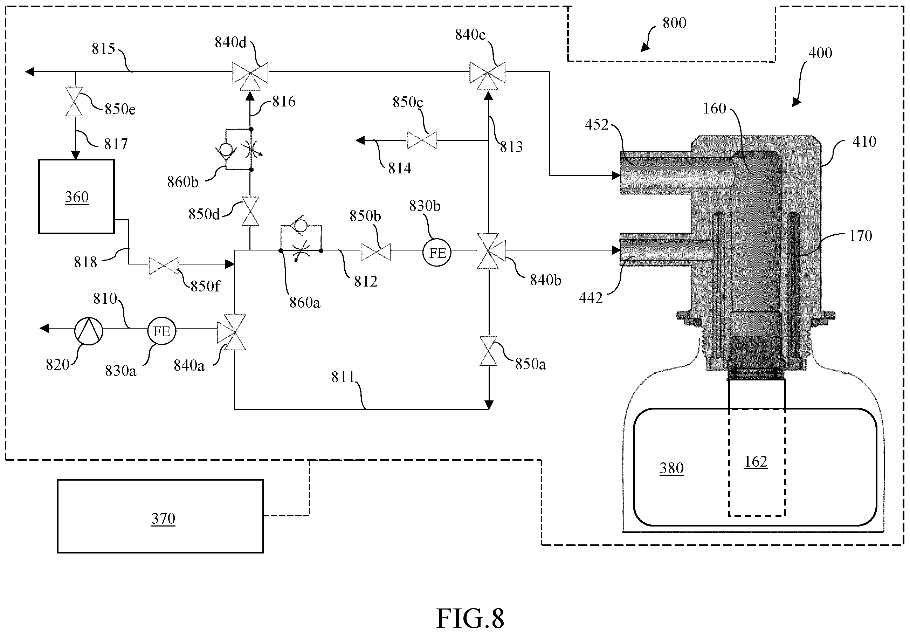

Turning to FIGS. 7 and 8, various embodiments of a water softening system utilizing a water softener with a single inlet and a single outlet are shown. The systems of FIGS. 7 and 8 are similar to the system 300 of FIG. 3. However, because the water softener only has one inlet and one outlet, the piping arrangements and valve placements are different. Thus, although the systems of FIGS. 7 and 8 can perform all of the functions of the system 300 of FIG. 3 (i.e., a service cycle, a backwash cycle, a brine draw cycle, a slow rinse cycle, a rapid rinse cycle, a brine tank refill cycle, and/or a bypass cycle) the methods of operation may be different. Therefore, the following embodiments discuss how each mode of operation may be performed in the respective systems.

Referring first to FIG. 7, a water softening system 700 is shown. As shown, the system 700 utilizes the water softener 400 as illustrated in FIG. 4. However, it is to be understood that the system 700 can include the arrangement of the water softener 400 as shown in FIG. 5.

The system 700 includes a first fluid line 710 in fluid communication with the inlet 442 and a second fluid line 711 in fluid communication with the first outlet 452. The first fluid line 710 can be in fluid communication with the second fluid line 711 via a bypass line 712, a backwash inlet line 713, and a backwash outlet line 714. Further, each of the first fluid line 710 and the second fluid line 711 may deliver fluid to or from the water softener 400 (i.e., fluid can flow in either direction). Thus, each of the first fluid line 710 and the second fluid line 711 can include various valves for controlling the flow direction of fluid throughout the system 700.

As shown, the first fluid line 710 includes a first three-way valve 720a, a second three-way valve 720b, and a third three-way valve 720c. The first fluid line 710 can further include a pump 730 and a flow meter 740. The second fluid line 711 can include a fourth three-way valve 720d, a fifth three-way valve 720e, and a sixth three-way valve 720f. The bypass line 712 takes off of the first fluid line 710 at the first three-way valve 720a and engages the second fluid line 711 at the fourth three-way valve 720d. The backwash inlet line 713 takes off of the first fluid line 710 at the second three-way valve 720b and engages the second fluid line 711 at the seventh three-way valve 720g. The backwash outlet line 714 takes off of the first fluid line 710 at the third three-way valve 720c and engages the second fluid line 711 at the sixth three-way valve 720f.

The second fluid line 711 can further include a waste line 715 in fluid communication with the fifth three-way valve 720e. The second fluid line 711 can also include a brine recycle line 716 in fluid communication with the brine tank 360. The take-off for the brine recycle line 716 can be downstream of the fourth three-way valve 720d. The brine tank 360 can also be in fluid communication with the first fluid line 710 via a brine injection line 717. The brine injection line 717 can engage the first fluid line 710 downstream of the third three-way valve 720c.

Thus, as can be seen, the system 700 has a different piping and valve structure as compared to the system 300 of FIG. 3. However, the system 700 can perform each of the cycles described above (i.e., a service cycle, a backwash cycle, a brine draw cycle, a slow rinse cycle, a rapid rinse cycle, a brine tank refill cycle, and a bypass cycle). Thus, the following embodiments discuss the particular flow paths and valve orientations (i.e., opened and closed positions) during the respective cycles. It is to be understood that each of the above cycles is intended to perform the same function as discussed above. It is to be further understood that the system 700 can include more or fewer components depending on the embodiment.

During the service cycle, the pump 730 delivers hard water to the water softener 400 via the first fluid line 710. The flow meter 740 can be used to monitor the flow rate of the hard water. Thus, each of the three-way valves 720a-720c is in a first position, where the first position diverts the hard water away from the bypass line 712, the backwash inlet line 713, and the backwash outlet line 714. The hard water flows through the inlet 442, down through the second channel 170, and into the tank 120, thereby coming into contact with the resin bed 380. The softened water that passes through the resin bed 380 travels up through the conduit 162, through the outlet 452, and through the second fluid line 711. Thus, each of the three-way valves 720d-720g is in a first position so that the softened water does not flow into the bypass line 712, the backwash inlet line 713, the backwash outlet line 714, or the waste line 715.

During the backwash cycle, the pump 730 pumps a cleaning fluid, such as water, into the first fluid line 710. However, now, the second three-way valve 720b is in a second position so that it diverts the cleaning fluid through the backwash inlet line 713. Additionally, the seventh three-way valve 720g is in a second position so that the cleaning fluid can flow from the backwash inlet line 713 into the second fluid line 711 toward the outlet 452. The backwash inlet line 713 can also include a first two-way valve 730a, to control the cleaning fluid's flow rate. Thus, the backwash fluid enters the water softener 400 via the outlet 452. The cleaning fluid flows down through the first channel 160 and the conduit 162 to the bottom of the resin bed 380. The cleaning fluid then rises up through the resin bed 380 and exits the water softener 400 through the second channel 170 and the inlet 442. The spent cleaning fluid then flows through the first fluid line 710. However, now the third three-way valve 720c is in a second position, so the spent cleaning fluid is diverted to the backwash outlet line 714. Thus, the sixth three-way valve 720f is in a second position, so the spent cleaning fluid cannot flow back toward the water softener 400. The fifth three-way valve 720e is also in a second position, diverting the flow of the spent cleaning fluid to the waste line 715. The waste line 715 can include a second two-way valve 730b for controlling the flow rate of the waste line 715.

During the brine draw cycle, the second three-way valve 720b and the third three-way valve 720c are switched back to the first position so that the pump 730 can pump a dilution fluid through the first fluid line 710 into the water softener 400. The brine injection line 717 can include a third two-way valve 730c. Thus, here the third two-way valve 730c is in an open position, permitting a sodium-rich solution from the brine tank 360 to mix with the dilution fluid in the first fluid line 710 before entering the water softener 400. Similar to the brine injection line 318 of FIG. 3, the brine injection line 717 can include a vacuum injector (not shown) to aid in injecting and mixing the sodium-rich fluid into the first fluid line 710 to create the brine solution.

After passing through the water softener 400, the spent brine solution is then sent to waste through the second fluid line 711. Thus, the sixth three-way valve 720f and the seventh three-way valve 720g are in the first position. The fifth three-way valve 720e is maintained in the second position so that the spent brine solution is sent to waste via the waste line 715.

During the slow rinse cycle, the flow rate of the sodium-rich fluid from the brine tank 360 is blocked in by closing the third two-way valve 730c. Thus, the flow of the dilution fluid remains the same as during the brine draw cycle.

During the rapid rinse cycle, no changes are made to the valve orientations. The only difference may be the flow rate of the dilution fluid.

During the brine tank refill cycle, the fifth three-way valve 720e is changed back to the first position so that the dilution fluid is diverted away from the waste line 715 into the remaining portion of the second fluid line 711. A fourth two-way valve 730d is opened so that the sodium-rich dilution fluid can flow through the brine recycle line 716.

During the bypass cycle, all valves except for the first three-way valve 720a, the fourth three-way valve 720d, and a fifth two-way valve 730e in the bypass line 712 are closed. The first three-way valve 720a and the fourth three-way valve 720d are each in a third position preventing the water from flowing towards the water softener 400.

Tables 2 and 3 below summarize the orientation of the valves of the system 700 during the above cycles. Tables 2 and 3 further include example run times, flow rates for each cycle, and line and/or valve diameters. However, it is to be understood that the run time, flow rate, and line size may vary depending on the embodiment.

**Table 2:**

| **Flow Cycle** | **Flow Rate (GPM) @ 50 psi inlet** | **Cycle Duration (mins)** | **Line Size** |
|---|---|---|---|
| Service | 4.8 | As per Usage | 3/4" |
| Back-wash | 2.4 | 8 | 1/2" |
| Brine Draw | Brine draw 0.25 GPM | 20 | 1/2" |
| Slow Rinse | 1 | 26 | |
| Rapid Rinse | 2.4 | 6 | |
| Brine tank Refill | 1 | 14 | 1/2" |
| Bypass | - | As per Usage | ¾" |

**Table 3:**

| **Flow Cycle** | **Valve 720a** | **Valve 720b** | **Valve 720c** | **Valve 720d** | **Valve 720e** | **Valve 720f** | **Valve 720g** | **Valve 730a** | **Valve 730b** | **Valve 730c** | **Valve 730d** | **Valve 730e** |
|---|---|---|---|---|---|---|---|---|---|---|---|---|
| Service | First position | First position | First position | First position | First position | First position | First position | Closed | Closed | Closed | Closed | Closed |
| Back-wash | First position | Second position | Second position | N/A | Second position | Second position | Second position | Open | Open | Closed | Closed | Closed |
| Brine Draw | First position | Second position | Second position | N/A | Second position | Second position | Second position | Closed | Open | Open | Closed | Closed |
| Slow Rinse | First position | Second position | Second position | N/A | Second position | Second position | Second position | Closed | Open | Closed | Closed | Closed |
| Rapid Rinse | First position | Second position | Second position | N/A | Second position | Second position | Second position | Closed | Open | Closed | Closed | Closed |
| Brine tank Refill | First position | Second position | Second position | First position | First position | Second position | Second position | Closed | Closed | Closed | Opened | Closed |
| Bypass | Third position | N/A | N/A | Third position | N/A | N/A | N/A | N/A | N/A | N/A | Closed | Open |

Similar to the system 300 of FIG. 3, one or more of the above valves or devices of the system 700 can be communicatively coupled to the controller 370. Thus, the above-described processes can be automated. A more detailed discussion on the controller 370 is provided below.

A benefit of the system 700 is that only a single inlet and a single outlet (i.e., the inlet 442 and the outlet 452) are needed. However, alternative piping and valving arrangements may be contemplated, such as the system 800 as illustrated in FIG. 8.

Turning to FIG. 8, the system 800 includes a first fluid line 810 including a pump 820 and a first flow meter 830a upstream of a first three-way valve 840a. Downstream of the first three-way valve 840a, the first fluid line 810 can split into an inlet line 811 and a brine draw line 812. The inlet line 811 includes a first two-way valve 850a and a second three-way valve 840b. The brine draw line 812 is positioned between the first three-way valve 840a and the second three-way valve 840b. The brine draw line 812 can include a first flow restrictor 860a, a second two-way valve 850b downstream of the first flow restrictor 860a, and a second flow meter 830b downstream of the second two-way valve 850b and upstream of the second three-way valve 840b.

On a third side of the second three-way valve 840b, the inlet line 811 may be a backwash outlet line 813. The backwash outlet line 813 engages a second fluid line 815 at a third three-way valve 840c. The second fluid line 815 is in fluid communication with the outlet 452. Upstream of the third three-way valve 840c, a waste line 814 takes off of the backwash outlet line 813. The waste line 814 can include a third two-way valve 850c. Downstream of the third three-way valve 840c, the second fluid line 815 can include a fourth three-way valve 840d. A backwash inlet line 816 can engage the second fluid line 815 at the fourth three-way valve 840d. The backwash inlet line 816 can include a fourth two-way valve 850d downstream of a brine draw line 812 and a second flow restrictor 860b downstream of the fourth two-way valve 850d and upstream of the fourth three-way valve 840d.

Further, a take-off for a brine recycle line 817 can be downstream of the fourth three-way valve 840d. A fifth two-way valve 850e may be positioned between the second fluid line 815 and the brine tank 360. Additionally, a brine injection line 818 can engage the brine draw line 812 downstream of the first three-way valve 840a and upstream of the first flow restrictor 860a. The brine injection line 318 can further include a sixth two-way valve 850f positioned between the brine tank 360 and the brine draw line 812.

Thus, as can be seen, the system 800 has a different piping and valve structure as compared to the system 700 of FIG. 7. However, the system 800 can perform each of the cycles described above (i.e., a service cycle, a backwash cycle, a brine draw cycle, a slow rinse cycle, a rapid rinse cycle, a brine tank refill cycle, and a bypass cycle). As such, the following embodiments discuss the particular flow paths and valve orientations (i.e., opened and closed positions) during the respective cycles. It is to be understood that each of the above cycles is intended to perform the same functions as discussed above. It is to be further understood that the system 800 can include more or fewer components depending on the embodiment.

During the service cycle, the pump 820 pumps hard water into the system 800 through the first fluid line 810. The first flow meter 830a may be used to monitor the flow rate of the hard water. The first three-way valve 840a is in a first position, where the first position directs the hard water through the inlet line 811 and away from the brine draw line 812. Thus, the first two-way valve 850a is in an open position, and the second three-way valve 840b is in a first position, where the first position directs the hard water into the inlet 442 and away from the brine draw line 812 and the backwash outlet line 813. The hard water flows through the second channel 170 and onto the top of the resin bed 380. As the hard water passes through the resin bed 380, the water is softened. The softened water flows through the conduit 162, through the first channel 160, and into the second fluid line 815. Thus, the third three-way valve 840c and the fourth three-way valve 840d are in a first position, where the first position directs the softened water out through the second fluid line 815 and away from the backwash outlet line 813 and the backwash inlet line 816. Further, the fifth two-way valve 850e is in a closed position, so the softened water does not flow into the brine tank 360.

During a backwash cycle, a cleaning fluid, such as water, is pumped into the first fluid line 810 by the pump 820. The first three-way valve 840a is in a second position, where the second position directs the cleaning fluid through the brine draw line 812 towards the backwash inlet line 816. Thus, the first three-way valve 840a directs the cleaning fluid away from the inlet line 811. Further, the second two-way valve 850b, and the sixth two-way valve 850f are closed. However, the fourth two-way valve 850d is in an open position so that the cleaning fluid can enter the backwash inlet line 816. As shown, the backwash inlet line 816 can include a second flow restrictor 860b. The second flow restrictor 350b can help control the flow rate of the cleaning fluid so that the flow rate in the resin bed 380 is not too high.

The fourth three-way valve 840d is in a second position, where the second position directs the cleaning fluid through the second fluid line 815 towards the water softener 400. The third three-way valve 840c remains in the first position. Thus, the cleaning fluid enters the outlet 452 and flows into the first channel 160. The conduit 162 delivers the cleaning fluid to the bottom of the resin bed 380. Thus, as the cleaning fluid rises up through the resin bed 380, particulates accumulated in the resin bed 380 during the service cycle are loosed and carried out of the tank 120 with the spent cleaning fluid. The spent cleaning fluid flows up through the second channel 170 and out of the inlet 442 and is directed to the waste line 814. Thus, the second three-way valve 840b is in a second position, where the second position directs the spent cleaning fluid toward the backwash outlet line 813. However, because the third three-way valve 840c is still in the first position, the spent cleaning water is directed to the waste line 814. Thus, the third two-way valve 850c is in an open position. The waste line 814 may be in fluid communication with a waste container or system.

In the brine draw cycle, a dilution fluid, such as soft water, is pumped into the first fluid line 810 by the pump 820. The dilution fluid is directed toward the brine draw line 812. However, now, the sixth two-way valve 850f is in an open position so that a sodium-rich fluid from the brine tank 360 can mix with the dilution fluid in the brine draw line 812 to form the brine solution. As such, the fourth two-way valve 850d is closed to direct the brine solution through the brine draw line 812. To direct the brine solution to the inlet 442, the second two-way valve 850b is in an open position and the second three-way valve 840b is in a second position, preventing the brine solution from flowing into the backwash outlet line 813. The second flow meter 830b can be used to monitor the flow rate of the brine solution, and the first flow restrictor 860a can be used to control the flow rate of the brine solution so that the proper mixing ratio of the dilution fluid and the sodium-rich fluid can be maintained.

Similar to the service cycle, the brine solution enters the water softener 400 through the inlet 442, flows through the second channel 170, and onto the top of the resin bed 380. As the brine solution passes through the resin bed 380, the sodium ions of the brine solution are swapped with the calcium and magnesium ions in the exhausted resin bed 380. The hard brine solution then flows through the conduit 162, through the first channel 160, and into the second fluid line 815. The hard brine solution may be sent to the waste line 814. Thus, the third three-way valve 840c is in a second position, which directs the hard brine water to the backwash outlet line 813. However, because the second three-way valve 840b is in a second position, the hard brine water is directed to the waste line 814. Thus, the third two-way valve 850c is in an open position.

During the slow rinse cycle, the only change to the valving is that the sixth two-way valve 850f is changed to a closed position so that the flow of the sodium-rich solution is stopped. Thus, the sodium-rich dilution fluid continues to flow through the system 800 as described in the brine draw cycle.

During the rapid rinse cycle, no changes are made to the valve orientations. The only change is that the flow rate of the dilution fluid may be adjusted.

During the brine tank refill cycle, instead of diverting the dilution fluid to waste, the dilution fluid is diverted through the second fluid line 815 and into the brine tank 360. Thus, the third three-way valve 840c is changed back to the first position so that the dilution fluid continues to flow through the second fluid line 815. Thus, the fourth three-way valve 840d is also in the first position. Additionally, the fifth two-way valve 850e is in an open position so that the sodium-rich dilution fluid is delivered to the brine tank 360.

During the bypass cycle, water is not delivered to the water softener 400. Instead, the water is diverted through the backwash outlet line 813 to the second fluid line 815. Thus, the first three-way valve 840a is in a second position, and the second two-way valve 850b and the sixth two-way valve 850f are in closed positions. The fourth two-way valve 850d is in an open position, and the fourth three-way valve 840d is in a third position directing the water away from the remainder of the system 800. Further, the fifth two-way valve 850e is in a closed position to prevent the water from flowing into the brine tank 360.

Table 4 below includes example run times, flow rates for each cycle, and line diameters. Table 5 below summarizes the orientation of the valves of the system 800 during the above cycles. However, it is to be understood that the run time, flow rate, and line size may vary depending on the embodiment.

**Table 4:**

| **Flow Cycle** | **Flow Rate (GPM) @ 50 psi inlet** | **Cycle Duration (mins)** | **Line Size** |
|---|---|---|---|
| Service | 2.38 | 330 | 1/2" |
| Back-wash | 2 | 8 | 1/2" |
| Brine Draw | 0.08+0.13 | 20 | 1/4" |
| Slow Rinse | 0.13 | 50 | 1/4" |
| Rapid Rinse | 2.38 | 6 | 1/2" |
| Brine tank Refill | 2.38 | 330 | 1/2" |
| Bypass | 2 | 8 | 1/2" |

**Table 5:**

| **Flow Cycle** | **Valve 840a** | **Valve 840b** | **Valve 840c** | **Valve 840d** | **Valve 850a** | **Valve 850b** | **Valve 850c** | **Valve 850d** | **Valve 850e** | **Valve 850f** |
|---|---|---|---|---|---|---|---|---|---|---|
| Service | First position | First position | First position | First position | Open | N/A | N/A | N/A | Closed | N/A |
| Back-wash | Second position | N/A | First position | Second position | N/A | Closed | Open | Open | N/A | Closed |
| Brine Draw | Second position | Second position | Second position | N/A | N/A | Open | Open | Closed | N/A | Open |
| Slow Rinse | Second position | Second position | Second position | N/A | N/A | Open | Open | Closed | N/A | Closed |
| Rapid Rinse | Second position | Second position | Second position | N/A | N/A | Open | Open | Closed | N/A | Closed |
| Brine tank Refill | Second position | Second position | First position | First position | N/A | Open | Open | Closed | Open | Closed |
| Bypass | Second position | N/A | N/A | Third position | N/A | Closed | N/A | Open | Closed | Closed |

As discussed above, one or more of the components of the system 300 of FIG. 3, the system 700 of FIG. 7, and the system 800 of FIG. 8 can be communicatively connected to a controller 370. Thus, the above modes of operation (i.e., the service cycle, the backwash cycle, the brine draw cycle, the slow rinse cycle, the rapid rinse cycle, the brine tank refill cycle, and/or the bypass cycle) can be automated.

The controller 370 can be provided in the form of a data-processing device configured to transmit and receive data from the system 300. For example, the controller 370 may receive information at a receiver included in the controller 370. A processor included in the controller 370 may analyze the received data and determine instructions to be sent back to the systems discussed herein. A transmitter of the controller 370 may send the instructions from the processor to one or more components of the system. The controller 370 can further include a memory. The memory can be configured to store data received from the systems. The memory can be implemented as a stand-alone memory unit and/or as part of a processor included in the controller 370. Further, in one non-limiting embodiment, a network may be coupled to the memory, which may include program instructions that are stored in the memory and executable by the processor to perform one or more of the methods described herein.

The network can be provided in the form of a network interface, a local network, or other communication connection and is not limited to the plurality of communication connections. One skilled in the art will recognize that a communication connection can transmit and receive data using a plurality of communication protocols, including but not limited to: wired, wireless, Bluetooth, cellular, satellite, GPS, RS-485, RF, MODBUS, CAN, CANBUS, DeviceNet, ControlNet, Ethernet TCP/IP, RS-232, Universal Serial Bus (USB), Firewire, Thread, proprietary protocol(s), or other communication protocol(s) as applicable. In some embodiments, the network is located proximate to one or more components of the system 300. The network can include the Internet, intranets, extranets, wide area networks ("WANs"), local area networks ("LANs"), wired networks, wireless networks, cloud networks, or other suitable networks, or any combination of two or more networks, Ethernet networks, and other types of networks.

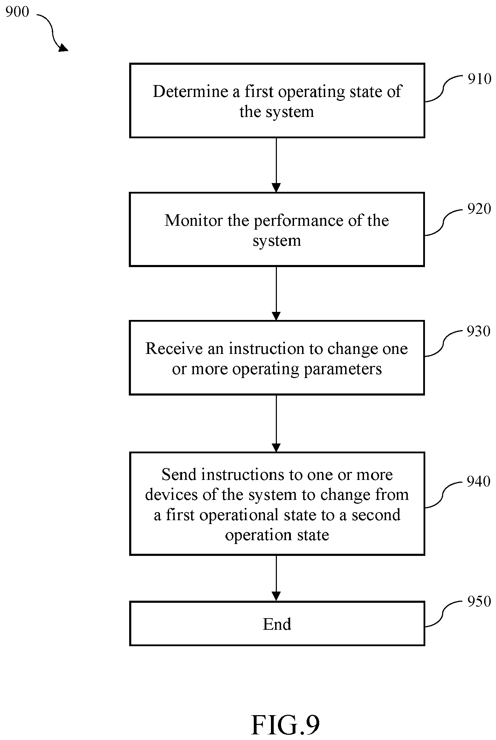

It is to be understood that the controller 370 disclosed herein can also receive and send instructions to other devices not shown in FIGS. 3, 7, and 8. For example, as discussed above, each of the systems disclosed herein can include one or more additional devices in fluid communication with the system such as conductivity meters, sodium analyzers, level sensors, and other known sensors and devices in the art. Therefore, the controller 370 may also be communicatively coupled to the devices. Thus, as shown in FIG. 9, a method 900 of automating the operation of a water softener may be utilized in any of the embodiments disclosed herein.

At block 910, the controller 370 determines a first operational state of the system. The operational state may be a service cycle, a backwash cycle, a brine draw cycle, a slow rinse cycle, a rapid rinse cycle, a brine tank refill cycle, or a bypass cycle.

At block 920, the controller monitors the performance of the system. This can include receiving and monitoring information from the system, such as flow rates, a period of time, conductivity levels, sodium levels, tank levels, or any other performance metrics for water softening systems known in the art.

At block 930, the controller 370 can receive an instruction to change one or more operating parameters of the system. The operating parameters can include one or more of a flow rate, an orifice size, a valve position, or any other operating parameter disclosed herein.

At block 940, the controller 370 sends instructions to one or more devices of the system to change from a first operational state to a second operation state, thereby ending the method 900 at block 950. For example, the controller may send instructions to one or more of the valves 340a340i of the system 300 to change from a first position, such as an open position, to a second position, such as a closed position.

Further aspects of the disclosure will be described by way of example:
In Example 1, a water softener head, comprising: a first inlet in fluid communication with and extending outwardly from the head; a first outlet in fluid communication with and extending outwardly from the head; a first channel in fluid communication with the first outlet; a second channel in fluid communication with the first inlet; a conduit connected to and extending from the first channel; and a connection portion designed to engage with a water softener tank, wherein the second channel surrounds the first channel.
In Example 2, the water softener head of Example 1, wherein the first outlet is positioned above and substantially parallel to the first inlet.
In Example 3, the water softener head of Example 1 or 2, wherein the first outlet is positioned directly across from the first inlet on an opposite side of the head.
In Example 4, the water softener head of any one of Examples 1 to 2, wherein the water softener head further includes a second inlet and a second outlet.
In Example 5, the water softener head of Example 4, wherein the second inlet is in fluid communication with the second channel and the second outlet is in fluid communication with the first channel.
In Example 6, the water softener head of Example 4 o 5, wherein the second inlet is positioned below and substantially parallel to the first inlet and the second outlet is positioned below and substantially parallel to the first outlet.
In Example 7, a water softener apparatus, comprising: a tank designed to contain a resin bed; and a water softener head coupled to the tank, the water softener head comprising: a first inlet; a first outlet; a first channel in fluid communication with the first outlet; a second channel in fluid communication with the first inlet; and a conduit connected to and extending from the first channel, wherein at least a portion of the conduit extends into the resin bed.
In Example 8, the water softener apparatus of Example 7, wherein the resin bed is an ion exchange bed.
In Example 9, a water softening system, comprising: a water softener apparatus comprising: a tank designed to contain a resin bed; and a water softener head coupled to the tank, the water softener head comprising: a first inlet; a first outlet; a first channel in fluid communication with the first outlet; a second channel in fluid communication with the first inlet; and a conduit connected to and extending from the first channel, wherein at least a portion of the conduit extends into the resin bed; a hard water line in fluid communication with the first inlet; a first valve for controlling a flow of hard water in the hard water line; a product line in fluid communication with the first outlet; a second valve for controlling a flow of softened water in the product line; and a controller configured to: detect a first operating state of the water softening system; monitor the performance of the water softening system; and send instructions to at least one of the first valve and the second valve to change from a first operational state to a second operational state.
In Example 10, the water softening system of Example 9, wherein a bypass line is provided in fluid communication with the hard water line and the product line.
In Example 11, the water softening system of Example 9 or 10, wherein a brine refill line is provided in fluid communication with the product line and a brine tank.
In Example 12, the water softening system of Example 11, wherein the brine tank is located in the tank.
In Example 13, the water softening system of Example 11 or 12, wherein the brine tank is in fluid communication with the first inlet via a brine injection line.
In Example 14, the water softening system of Example 13, wherein the brine injection line is in fluid communication with the hard water line.
In Example 15, the water softening system of any one of Examples 9 to 14, wherein a waste line is provided in fluid communication with the product line.
In Example 16, the water softening system of any one of Examples 9 to 15, wherein the controller is configured to receive an instruction from a user to change one or more operating parameters of the water softening system.
In Example 17, the water softening system of any one of Examples 9 to 16, wherein the first operational state is a valve closed position and the second operational state is a valve open state.
In Example 18, the water softening system of any one of Examples 9 to 17, wherein the controller is configured to send the instructions to at least one of the first valve or the second valve to change from the first operational state to the second operational state in response to detecting a first operational parameter has reached a threshold.
In Example 19, the water softening system of any one of Examples 9 to 18, wherein the one or more operating parameters of the water softening system includes at least one of a flow rate, a valve position, a time period, a conductivity level, or a sodium level.
In Example 20, the water softening system of any one of Examples 9 to 19, wherein the controller is configured to initiate at least one of a service cycle, a backwash cycle, a brine draw cycle, a slow rinse cycle, a rapid rinse cycle, a brine tank refill cycle, or a bypass cycle.

It will be appreciated by those skilled in the art that while the invention has been described above in connection with particular embodiments and examples, the invention is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein. Various features and advantages of the invention are set forth in the following claims.

## Claims

1. A water softening system, comprising:
a water softener apparatus comprising:
a tank designed to contain a resin bed; and
a water softener head coupled to the tank, the water softener head comprising:
a first inlet;
a first outlet;
a first channel in fluid communication with the first outlet;
a second channel in fluid communication with the first inlet; and
a conduit connected to and extending from the first channel, wherein at least
a portion of the conduit extends into the resin bed;
a hard water line in fluid communication with the first inlet;
a first valve for controlling a flow of hard water in the hard water line;
a product line in fluid communication with the first outlet;
a second valve for controlling a flow of softened water in the product line; and
a controller configured to:
detect a first operating state of the water softening system;
monitor the performance of the water softening system; and
send instructions to at least one of the first valve and the second valve to change from a first operational state to a second operational state.

2. The water softening system of claim 1, wherein a bypass line is provided in fluid communication with the hard water line and the product line.

3. The water softening system of claim 1 or 2, wherein a brine refill line is provided in fluid communication with the product line and a brine tank.

4. The water softening system of claim 3, wherein the brine tank is located in the tank.

5. The water softening system of claim 3 or 4, wherein the brine tank is in fluid communication with the first inlet via a brine injection line.

6. The water softening system of claim 5, wherein the brine injection line is in fluid communication with the hard water line.

7. The water softening system of claim 6, wherein a waste line is provided in fluid communication with the product line.

8. The water softening system of any one of claims 1 to 7, wherein the controller is configured to receive an instruction from a user to change one or more operating parameters of the water softening system.

9. The water softening system of any one of claims 1 to 8, wherein the first operational state is a valve closed position and the second operational state is a valve open state.

10. The water softening system of any one of claims 1 to 9, wherein the controller is configured to send the instructions to at least one of the first valve or the second valve to change from the first operational state to the second operational state in response to detecting a first operational parameter has reached a threshold.

11. The water softening system of any one of claims 1 to 10, wherein the one or more operating parameters of the water softening system includes at least one of a flow rate, a valve position, a time period, a conductivity level, or a sodium level.

12. The water softening system of any one of claims 1 to 11, wherein the controller is configured to initiate at least one of a service cycle, a backwash cycle, a brine draw cycle, a slow rinse cycle, a rapid rinse cycle, a brine tank refill cycle, or a bypass cycle.

13. A method of automating the operation of a water softener comprising:
determining a first operational state of the system, wherein the first operational state comprises a service cycle, a backwash cycle, a brine draw cycle, a slow rinse cycle, a rapid rinse cycle, a brine tank refill cycle, or a bypass cycle;
monitoring the performance of the system;
receiving an instruction to change one or more operating parameters of the system; and
sending instructions to one or more devices of the system to change from a first operational state to a second operation state.

14. The method of claim 13, wherein sending instructions to the one or more devices of the system to change from the first operational state to the second operation state comprises sending the instructions to one or more of the valves of the system to change from an open position to a closed position.

15. The method of claim 13 or 14, wherein the monitoring the performance of the system comprises receiving and monitoring flow rates, a period of time, conductivity levels, sodium levels, or tank levels.
